# FASCICULE DE BREVET EUROPEEN

(11) **EP 2 751 501 B1**
(45) Date de publication et mention de la délivrance du brevet: **03.06.2020**
(21) Numéro de dépôt: 12744087.3
(22) Date de dépôt: 12.07.2012
(51) Int. Cl.: F25B 30/02

(54) **Méthode d'utilisation du tétrafluoropropène comme réfrigérant dans un cycle de réfrigération supercritique**
Verfahren zur Verwendung von Tetrafluorpropen als Kältemittel in einem überkritischen Kältekreislauf
Method of using tetrafluoropropene as refrigerant in a supercritical refrigeration cycle

(30) Priorité: 30.08.2011 FR 1157622
(43) Date de publication de la demande: 09.07.2014
(73) Titulaire: Arkema France, 92700 Colombes (FR)
(72) Inventeur: RACHED, Wissam, F-69630 Chaponost (FR)
(74) Mandataire: Chahine, Audrey Claire
(86) Numéro de dépôt international: PCT/FR2012/051650
(87) Numéro de publication internationale: WO 2013/030476

(56) Documents cités:
- EP-A2- 1 016 836
- WO-A2-2007/002625
- WO-A2-2011/056824
- US-A- 6 065 305
- US-A1- 2006 243 944
- TANAKA K., HIGASHI Y.: "Thermodynamic properties of HFO-1234yf (2,3,3,3-tetrafluoropropene)", INTERNATIONAL JOURNAL OF REFRIGERATION, vol. 33, 2010, pages 474-479, XP002670956,

## Description

### DOMAINE DE L'INVENTION

La présente invention concerne l'utilisation de fluides de transfert de chaleur à base de tétrafluoropropène en régime supercritique, dans le cadre d'installations de pompe à chaleur.

### ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Il est également toujours nécessaire de mettre au point d'autres fluides de transfert de chaleur présentant un potentiel de réchauffement global (GWP) inférieur à celui des fluides de transfert de chaleur actuellement utilisés, et présentant des performances équivalentes ou améliorées.

Traditionnellement, le fluide de transfert de chaleur utilisé pour les pompes à chaleur à haute température était le CFC-114 (1,2-dichlorotétrafluoroéthane). Un autre fluide de transfert de chaleur chloré proposé dans cette application était le HCFC-123 (2,2-dichloro-1,1,1-trifluoroéthane).

Compte tenu des contraintes environnementales rappelées ci-dessus, divers fluides de transfert de chaleur à base d'hydrofluorocarbures ont été proposés en remplacement du CFC-114 ou du HCFC-123 pour les pompes à chaleur à haute température, par exemple des fluides contenant du HFC-245fa (1,1,1,3,3-pentafluoropropane) en mélange avec d'autres composés. On peut citer à cet égard les documents US 6,814,884, WO 2010/081990, WO 2011/015737 et WO 2011/033200.

Il existe toutefois un besoin de fournir des pompes à chaleur à haute température fonctionnant avec des fluides à GWP plus faible, et présentant de meilleures performances énergétiques.

Par ailleurs, il est connu d'utiliser des fluides de transfert de chaleur en régime supercritique.

On peut citer par exemple le document WO 2008/034828, qui décrit un système de climatisation automobile, dans lequel du CO₂ est utilisé en régime supercritique.

D'autres documents utilisent des fluides de transfert de chaleur en régime supercritique pour la génération de courant électrique (cycles de Rankine). C'est le cas du document WO 2007/131281, dans lequel les composés utilisés sont le CO₂, le n-pentane et quelques hydrofluorocarbures. C'est également le cas du document US 6,964,168, dans lequel les composés utilisés sont des hydrofluorocarbures ou de l'ammoniac. C'est encore le cas du document WO 96/27739, dans lequel les composés utilisés sont aussi des hydrofluorocarbures ou de l'ammoniac ou encore des hydrochlorofluorocarbures.

Par ailleurs, les hydrofluorooléfines, notamment le HFO-1234yf (2,3,3,3-tétrafluoropropène) et le HFO-1234ze (1,3,3,3-tétrafluoropropène), sont connues pour être des composés de bas GWP, utilisables pour des applications de transfert de chaleur ou autres. Les documents US 2004/0256594, WO 2005/105947 et WO 2007/002625 évoquent l'utilisation d'hydrofluorooléfines en régime supercritique pour des applications bien particulières telles que le nettoyage, l'extraction de substances biologiques ou le dépôt de catalyseurs. Le document EP-A 1 016 836 décrit un système de réfrigération sous-critique utilisant du tétrafluoropropène comme réfrigérant.

Il existe donc toujours un besoin de fournir des pompes à chaleur à haute température fonctionnant avec des fluides à GWP plus faible, et présentant de meilleures performances énergétiques, ainsi que souligné ci-dessus.

### RESUME DE L'INVENTION

L'invention concerne en premier lieu un procédé de chauffage d'un fluide ou d'un corps au moyen d'un circuit de compression de vapeur contenant un fluide de transfert de chaleur comprenant du tétrafluoropropène, ledit procédé comprenant de manière successive et cyclique l'évaporation du fluide de transfert de chaleur, la compression du fluide de transfert de chaleur, le refroidissement du fluide de transfert de chaleur et la détente du fluide de transfert de chaleur, le fluide de transfert de chaleur étant à l'état supercritique à l'issue de la compression.

Selon un mode de réalisation, le fluide ou le corps chauffé est chauffé à une température supérieure ou égale à 100°C, de préférence supérieure ou égale à 110°C, plus particulièrement supérieure ou égale à 120°C, et de manière particulièrement préférée supérieure ou égale à 130°C.

Selon un mode de réalisation, lors du refroidissement, le fluide de transfert de chaleur échange de la chaleur avec le fluide ou corps chauffé ou avec un fluide caloporteur, et de préférence l'augmentation de température du fluide ou corps chauffé ou du fluide caloporteur, lors de l'échange de chaleur, est supérieure ou égale à 10°C, de préférence supérieure ou égale à 20°C, plus particulièrement supérieure ou égale à 30°C, et de manière particulièrement préférée supérieure ou égale à 40°C.

Selon un mode de réalisation, le fluide de transfert de chaleur comprend du 1,3,3,3-tétrafluoropropène ou consiste en du 1,3,3,3-tétrafluoropropène.

Selon un mode de réalisation, le fluide de transfert de chaleur comprend du 2,3,3,3-tétrafluoropropène ou consiste en du 2,3,3,3-tétrafluoropropène.

Selon un mode de réalisation, le fluide de transfert de chaleur comprend au moins 50 % de tétrafluoropropène, de préférence au moins 75 %, et plus particulièrement au moins 90 % de tétrafluoropropène.

Selon un mode de réalisation, le fluide de transfert de chaleur comprend en outre un ou plusieurs hydrofluorocarbures, de préférence choisis parmi le 1,1,1,2-tétrafluoroéthane, le difluorométhane, le 1,1-difluoroéthane et le 1,1,1,2,2-pentafluoroéthane.

Selon un mode de réalisation, le fluide de transfert de chaleur est associé avec un ou plusieurs additifs choisis parmi les lubrifiants, les stabilisants, les tensioactifs, les agents traceurs, les agents fluorescents, les agents odorants, les agents de solubilisation et leurs mélanges.

La présente invention permet de répondre aux besoins ressentis dans l'état de la technique. Elle fournit plus particulièrement des pompes à chaleur à haute température fonctionnant avec des fluides à GWP plus faible, et présentant de meilleures performances énergétiques que celles de l'état de la technique.

L'invention fournit une alternative particulièrement avantageuse aux pompes à chaleur à haute température fonctionnant avec du CFC-114, du HCFC-123 ou du HFC-245fa.

L'invention permet en particulier d'obtenir un GWP plus faible, un coefficient de performance plus élevé et une capacité volumétrique plus élevée que dans les applications analogues connues de l'état de la technique.

Par rapport à des fluides classiquement utilisés en régime supercritique pour le transfert de chaleur, tels que le CO₂, l'invention permet un fonctionnement à une pression largement inférieure, ce qui implique des contraintes bien moins importantes sur les matériaux utilisés pour l'installation.

### BREVE DESCRIPTION DES FIGURES

La **figure 1** représente le cycle thermodynamique d'une pompe à chaleur (enthalpie en kJ/kg en abscisse, température en °C en ordonnée) fonctionnant en régime sous-critique avec du HCFC-123.
La **figure 2** représente le cycle thermodynamique d'une pompe à chaleur (enthalpie en kJ/kg en abscisse, température en °C en ordonnée) selon l'invention, fonctionnant en régime supercritique avec du HFO-1234yf.

### DESCRIPTION DE MODES DE REALISATION DE L'INVENTION

L'invention est maintenant décrite plus en détail et de façon non limitative dans la description qui suit.

Sauf mention contraire, dans l'ensemble de la demande les proportions de composés indiquées sont données en pourcentages massiques.

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par « composé de transfert de chaleur », respectivement « fluide de transfert de chaleur » (ou fluide frigorigène), on entend un composé, respectivement un fluide, susceptible d'absorber de la chaleur en s'évaporant à basse température et basse pression et de rejeter de la chaleur en se refroidissant à haute température et haute pression, dans un circuit de compression de vapeur. De manière générale, un fluide de transfert de chaleur peut comprendre un seul, deux, trois ou plus de trois composés de transfert de chaleur.

Par « composition de transfert de chaleur » on entend une composition comprenant un fluide de transfert de chaleur et éventuellement un ou plusieurs additifs qui ne sont pas des composés de transfert de chaleur pour l'application envisagée.

Les additifs peuvent notamment être choisis parmi les lubrifiants, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butylglycidyl éther, hexanedioldiglycidyl éther, allylglycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient une composition de transfert de chaleur ainsi que définie ci-dessus.

Le circuit de compression de vapeur comprend au moins un évaporateur, un compresseur, un condenseur (appelé refroidisseur en régime supercritique) et un détendeur, ainsi que des lignes de transport de fluide de transfert de chaleur entre ces éléments. L'évaporateur et le condenseur (ou refroidisseur) comprennent un échangeur de chaleur permettant un échange de chaleur entre le fluide de transfert de chaleur et un autre fluide ou corps.

L'invention concerne plus spécifiquement un procédé de chauffage. Ainsi, de la chaleur est cédée (directement ou indirectement, via un fluide caloporteur) du fluide de transfert de chaleur, lors du refroidissement de celui-ci, au fluide ou au corps que l'on chauffe, et ce à une température relativement élevée par rapport à l'environnement. L'installation permettant de mettre en œuvre le transfert de chaleur est ainsi appelée « pompe à chaleur ».

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz ou par engrenage.

Dans le cadre de l'invention, les fluides de transfert de chaleur sont utilisés en régime supercritique dans le circuit de compression de vapeur, c'est-à-dire qu'ils passent par l'état supercritique au moins une fois, en particulier à l'issue de la compression / à la sortie du compresseur. L'état supercritique est obtenu lorsque le fluide est à une température supérieure à sa température critique et à une pression supérieure à sa pression critique. Un fluide à l'état supercritique présente des propriétés physiques intermédiaires entre l'état gazeux et l'état liquide.

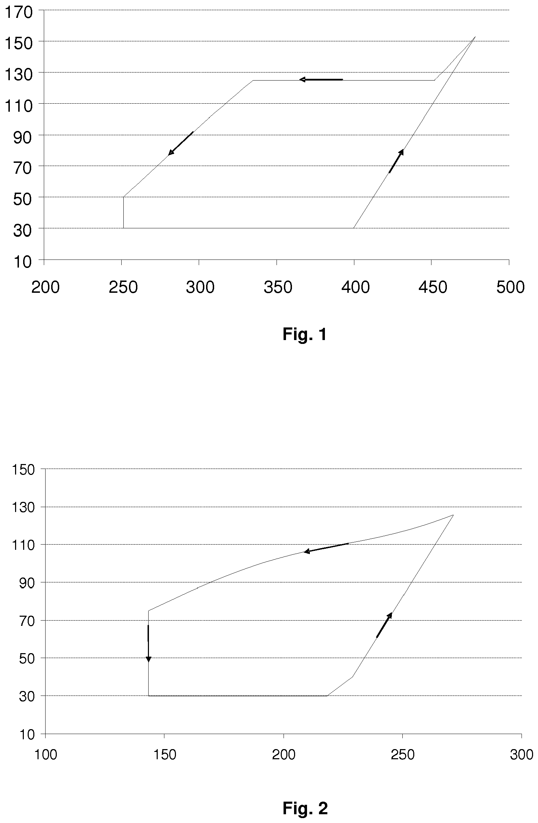

En faisant référence à la **figure 1****,** un cycle classique (sous-critique, dit de Hirn inverse) dans un circuit de compression de vapeur pour une pompe à chaleur comprend : le changement d'état du fluide de transfert de chaleur d'une phase liquide (ou diphasique liquide / vapeur) vers une phase vapeur à une pression relativement faible (évaporation), puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression (détente) pour recommencer le cycle.

Dans un tel cycle, le fluide de transfert de chaleur reste à une température inférieure à la température critique et / ou à une pression inférieure à la pression critique. Le fluide est donc à l'état liquide et / ou à l'état vapeur pendant tout le cycle.

En faisant référence à la **figure 2****,** un cycle supercritique tel qu'utilisé dans le cadre de la présente invention se différencie en ce que le fluide de transfert de chaleur est à l'état supercritique (ni liquide ni vapeur) à l'issue de la compression. Il repasse à l'état liquide lors de l'étape de refroidissement dans l'échangeur de chaleur appelé refroidisseur. A l'issue de la détente et de l'évaporation, le liquide passe (partiellement) à l'état gazeux tout comme pour le cycle sous-critique. La température d'évaporation du fluide est donc inférieure à la température critique. Une installation fonctionnant comme indiqué sur la Fig. 2 peut également éventuellement comprendre au moins un circuit de fluide caloporteur utilisé pour transmettre la chaleur (avec ou sans changement d'état) entre le circuit de fluide de transfert de chaleur et le fluide ou corps à chauffer.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Il est possible d'utiliser tout type d'échangeur de chaleur pour la mise en œuvre des fluides de transfert de chaleur selon l'invention, et notamment des échangeurs de chaleur à co-courant ou, de préférence, des échangeurs de chaleur à contre-courant.

Les fluides de transfert de chaleur utilisés dans le cadre de la présente invention sont des compositions comprenant du tétrafluoropropène.

Le tétrafluoropropène peut être du HFO-1234yf ou du HFO-1234ze ou un mélange de ceux-ci. En ce qui concerne le HFO-1234ze, il peut être sous forme cis ou trans ou sous forme d'un mélange de ces deux formes.

Le HFO-1234yf présente une température critique de 95°C pour une pression critique de 34 bar. Le HFO-1234ze présente une température critique de 110°C pour une pression critique de 36 bar. Ces composés sont donc bien adaptés pour une utilisation en régime supercritique dans les pompes à chaleur à haute température.

Selon un mode de réalisation, les fluides de transfert de chaleur utilisés dans l'invention peuvent comprendre un ou plusieurs composés de transfert de chaleur supplémentaires.

Ces composés de transfert de chaleur supplémentaires peuvent être notamment choisis parmi les hydrocarbures, les hydrofluorocarbures, les éthers, les hydrofluoroéthers et les fluorooléfines.

Selon des modes de réalisation particuliers, les fluides de transfert de chaleur selon l'invention peuvent être des compositions ternaires (consistant en trois composés de transfert de chaleur) ou quaternaires (consistant en quatre composés de transfert de chaleur), en association avec l'huile de lubrification pour former les compositions de transfert de chaleur telles que définies ci-dessus.

Lorsque des composés de transfert de chaleur supplémentaires sont présents, il est préféré que leur proportion totale dans les fluides de transfert de chaleur ci-dessus soit inférieure ou égale à 50 %, ou à 45 %, ou à 40 %, ou à 35 %, ou à 30 %, ou à 25 %, 20 %, ou à 15 %, ou à 10 %, ou à 5 %, ou à 2 %.

A titre d'exemple de composés de transfert de chaleur supplémentaires possibles, on peut citer le HFC-134a (1,1,1,2-tétrafluoroéthane), le HFC-152a (1,1-difluoroéthane), le HFC-125 (1,1,1,2,2-pentafluoroéthane et le HFC-32 (difluorométhane). Ainsi, à titre de fluides de transfert de chaleur on peut utiliser des mélanges (de préférence binaires) de HFO-1234yf et de HFC-134a ; ou de HFO-1234ze et de HFC-134a ; ou de HFO-1234yf et de HFC-32 ; ou de HFO-1234ze et de HFC-32 ; ou de HFO-1234yf et de HFC-152a ; ou de HFO-1234ze et de HFC-152a ; ou de HFO-1234yf et de HFC-125 ; ou de HFO-1234ze et de HFC-125.

De manière générale, la température critique du fluide de transfert de chaleur considéré doit être inférieure à la température de chauffage souhaitée du fluide ou corps considéré.

Toutefois, une température critique de fluide de transfert de chaleur trop faible impose de travailler à des pressions très élevées pour atteindre des températures de chauffage élevées, ce qui est extrêmement complexe à mettre en œuvre. Par exemple, à une température critique de 31 °C (température critique du CO₂), chauffer un corps ou fluide à 100°C impose d'utiliser des pressions extrêmement élevées.

Par conséquent, la température critique du fluide de transfert de chaleur est de préférence de 75 à 160°C, de manière plus particulièrement préférée de 90 à 120°C, idéalement de 95 à 110°C.

Dans le cas des fluides de transfert de chaleur binaires cités ci-dessus, des formulations préférées sont les suivantes :
- de 50 à 65 % de HFO-1234yf et de 35 à 50 % de HFC-134a, de préférence de 53 à 58 % de HFO-1234yf et de 42 à 47 % de HFC-134a (par exemple environ 56 % de HFO-1234yf et 44 % de HFC-134a) ;
- de 15 à 90 % de HFO-1234yf et de 10 à 85 % de HFC-32;
- de 90 à 99 % de HFO-1234yf et de 1 à 10 % de HFC-152a, de préférence de 93 à 97 % de HFO-1234yf et de 3 à 7 % de HFC-152a (par exemple environ 95 % de HFO-1234yf et environ 5 % de HFC-152a) ;
- de 90 à 99 % de HFO-1234yf et de 1 à 10 % de HFC-125, de préférence de 93 à 97 % de HFO-1234yf et de 3 à 7 % de HFC-125 (par exemple environ 95 % de HFO-1234yf et environ 5 % de HFC-125) ;
- de 65 à 85 % de HFO-1234ze et de 15 à 35 % de HFC-134a, de préférence de 70 à 80 % de HFO-1234ze et de 20 à 30 % de HFC-134a (par exemple environ 75 % de HFO-1234ze et 25 % de HFC-134a) ;
- de 80 à 98 % de HFO-1234ze et de 2 à 20 % de HFC-32, de préférence de 85 à 95 % de HFO-1234ze et de 5 à 15 % de HFC-32 (par exemple environ 90 % de HFO-1234ze et 10 % de HFC-32);
- de 90 à 99 % de HFO-1234ze et de 1 à 10 % de HFC-152a, de préférence de 93 à 97 % de HFO-1234ze et de 3 à 7 % de HFC-152a (par exemple environ 95 % de HFO-1234ze et environ 5 % de HFC-152a) ;
- de 90 à 99 % de HFO-1234ze et de 1 à 10 % de HFC-125, de préférence de 93 à 97 % de HFO-1234ze et de 3 à 7 % de HFC-125 (par exemple environ 95 % de HFO-1234ze et environ 5 % de HFC-125).

Selon un autre mode de réalisation, les fluides de transfert de chaleur consistent essentiellement en du HFO-1234yf et / ou du HFO-1234ze, voire consistent en du HFO-1234yf et / ou du HFO-1234ze.

Des impuretés peuvent être présentes dans de tels fluides de transfert de chaleur, à raison de moins de 1 %, de préférence moins de 0,5 %, de préférence moins de 0,1 %, de préférence moins de 0,05 % et de préférence moins de 0,01 %.

Selon des modes de réalisation particuliers, la proportion de HFO-1234yf dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Selon des modes de réalisation particuliers, la proportion de HFO-1234ze dans le fluide de transfert de chaleur peut être: de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Avantageusement, les fluides de transfert de chaleur utilisés dans le cadre de l'invention sont non-inflammables, au sens de la norme ASHRAE 34-2007, et de préférence avec une température de test de 60°C au lieu de 100°C.

L'invention s'applique pour les procédés de chauffage à haute température, c'est-à-dire de préférence ceux dans lesquels la température du fluide ou du corps chauffé est supérieure ou égale à 100°C, par exemple supérieure ou égale à 110°C ou supérieure ou égale à 120°C ou supérieure ou égale à 130°C, et de préférence inférieure ou égale à 160°C.

De préférence, la pression maximale dans le circuit de compression de vapeur est de 25 à 85 bar, de préférence de 25 à 60 bar.

L'invention trouve en particulier à s'appliquer dans les domaines suivants :
- chauffage et stérilisation de produits alimentaires, par exemple le lait, de préférence à une température de 130 à 150°C;
- production de vapeur d'eau sous pression, notamment dans l'industrie chimique, la papèterie, le chauffage urbain, impliquant de préférence un chauffage à une température de 105 à 135°C;
- production de chaleur dans le cadre de procédés industriels par récupération de rejets thermiques à basse température, par exemple chauffage à une température de 100 à 150°C par récupération de rejets thermiques à une température de 50 à 90°C.

Selon un mode de réalisation, l'augmentation de la température du fluide ou corps chauffé lors de l'échange de chaleur avec le fluide de transfert de chaleur (dans l'échangeur de chaleur appelé refroidisseur) est supérieure ou égale à 10°C, de préférence supérieure ou égale à 20°C, plus particulièrement supérieure ou égale à 30°C, et de manière particulièrement préférée supérieure ou égale à 40°C. Lorsque le fluide ou corps chauffé n'échange pas directement de la chaleur avec le fluide de transfert de chaleur, mais *via* au moins un fluide caloporteur, l'augmentation de température préférée ci-dessus s'entend comme étant l'augmentation de température du fluide caloporteur (dans l'échangeur de chaleur appelé refroidisseur). Ce mode de réalisation permet d'obtenir une efficacité maximale.

### EXEMPLE

L'exemple illustre l'invention sans toutefois la limiter.

A partir de données sur les composés de transfert de chaleur disponibles dans le logiciel Refrop, on évalue les performances énergétiques, respectivement :
(A) d'une pompe à chaleur fonctionnant en régime sous-critique (selon la **figure 1**) avec du CFC-114, du HFC-245fa ou du HCFC-123, pour chauffer un fluide thermique depuis une température initiale de 70°C jusqu'à une température finale de 120°C, avec un rejet thermique basse température à 40°C ;
(B) d'une pompe à chaleur fonctionnant en régime supercritique (selon la **figure 2**) avec du HFO-1234yf ou du HFO-1234ze, pour chauffer le même fluide thermique.

Le cycle sous-critique (A) fonctionne avec une température à l'évaporateur de 80°C, une température de condensation de 140°C, une surchauffe de 10°C, un sous-refroidissement de 50°C et un rendement isentropique de 60 %.

Le cycle supercritique (B) fonctionne avec une température à l'évaporateur de 80 °C, une température en sortie du refroidisseur de 90°C (équivalent à un sous refroidissement de 50°C), une surchauffe de 10°C et un rendement isentropique de 60 %.

Les résultats obtenus sont rassemblés dans le tableau suivant :

| Produit | TSC (°C) | PEVD (bar) | PE (bar) | TDC | COP | CAP (kJ/m³) | % CAP |
|---|---|---|---|---|---|---|---|
| CFC-114 | 149,7 | 29,6 | 9,31 | 3,18 | 5,02 | 7999 | 100 |
| HFC-245fa | 150,8 | 28,29 | 7,89 | 3,58 | 5,04 | 7756 | 97 |
| HCFC-123 | 154,3 | 17,58 | 4,89 | 3,59 | 4,96 | 4988 | 64 |
| HFO-1234ze | 140 | 46,8 | | 2,33 | 5,65 | 14550 | 181 |
| HFO-1234yf | 140 | 58,7 | | 2,33 | 5,13 | 16400 | 205 |

Dans ce tableau, TSC désigne la température en sortie du compresseur, PEVD désigne la pression à l'entrée de la vanne de détente, PE désigne la pression à l'évaporateur, TDC désigne le taux de compression, COP désigne le coefficient de performance, CAP désigne la capacité de chauffage par unité de masse comprimée et % CAP désigne le rapport de la capacité volumétrique sur la capacité volumétrique de référence du CFC-114.

## Revendications

1. Procédé de chauffage d'un fluide ou d'un corps au moyen d'un circuit de compression de vapeur contenant un fluide de transfert de chaleur comprenant du tétrafluoropropène, ledit procédé comprenant de manière successive et cyclique l'évaporation du fluide de transfert de chaleur, la compression du fluide de transfert de chaleur, le refroidissement du fluide de transfert de chaleur et la détente du fluide de transfert de chaleur, **caractérisé en ce que** le fluide de transfert de chaleur est à l'état supercritique à l'issue de la compression.

2. Procédé selon la revendication 1, dans lequel le fluide ou le corps chauffé est chauffé à une température supérieure ou égale à 100°C, de préférence supérieure ou égale à 110°C, plus particulièrement supérieure ou égale à 120°C, et de manière particulièrement préférée supérieure ou égale à 130°C.

3. Procédé selon la revendication 1 ou 2, dans lequel, lors du refroidissement, le fluide de transfert de chaleur échange de la chaleur avec le fluide ou corps chauffé ou avec un fluide caloporteur, et de préférence l'augmentation de température du fluide ou corps chauffé ou du fluide caloporteur, lors de l'échange de chaleur, est supérieure ou égale à 10°C, de préférence supérieure ou égale à 20°C, plus particulièrement supérieure ou égale à 30°C, et de manière particulièrement préférée supérieure ou égale à 40°C.

4. Procédé selon l'une des revendications 1 à 3, dans lequel le fluide de transfert de chaleur comprend du 1,3,3,3-tétrafluoropropène ou consiste en du 1,3,3,3-tétrafluoropropène.

5. Procédé selon l'une des revendications 1 à 4, dans lequel le fluide de transfert de chaleur comprend du 2,3,3,3-tétrafluoropropène ou consiste en du 2,3,3,3-tétrafluoropropène.

6. Procédé selon l'une des revendications 1 à 5, dans lequel le fluide de transfert de chaleur comprend au moins 50 % de tétrafluoropropène, de préférence au moins 75 %, et plus particulièrement au moins 90 % de tétrafluoropropène.

7. Procédé selon l'une des revendications 1 à 6, dans lequel le fluide de transfert de chaleur comprend en outre un ou plusieurs hydrofluorocarbures, de préférence choisis parmi le 1,1,1,2-tétrafluoroéthane, le difluorométhane, le 1,1-difluoroéthane et le 1,1,1,2,2-pentafluoroéthane,

8. Procédé selon l'une des revendications 1 à 7, dans lequel le fluide de transfert de chaleur est associé avec un ou plusieurs additifs choisis parmi les lubrifiants, les stabilisants, les tensioactifs, les agents traceurs, les agents fluorescents, les agents odorants, les agents de solubilisation et leurs mélanges.

## Patentansprüche

1. Verfahren zum Erwärmen eines Fluids oder eines Körpers mit Hilfe eines Dampfverdichtungskreislaufs, der ein Wärmeübertragungsfluid enthält, das Tetrafluorpropen umfasst, wobei das Verfahren aufeinanderfolgend und zyklisch das Verdampfen des Wärmeübertragungsfluids, das Verdichten des Wärmeübertragungsfluids, das Abkühlen des Wärmeübertragungsfluids und das Entspannen des Wärmeübertragungsfluids umfasst, **dadurch gekennzeichnet, dass** das Wärmeübertragungsfluid am Ende der Verdichtung in überkritischem Zustand vorliegt.

2. Verfahren nach Anspruch 1, wobei das erwärmte Fluid bzw. der erwärmte Körper auf eine Temperatur größer oder gleich 100 °C, vorzugsweise größer oder gleich 110 °C, spezieller größer oder gleich 120 °C und besonders bevorzugt größer oder gleich 130 °C erwärmt wird.

3. Verfahren nach Anspruch 1 oder 2, bei dem das Wärmeübertragungsfluid während des Abkühlens mit dem erwärmten Fluid oder Körper oder mit einem Wärmeträgerfluid Wärme austauscht und vorzugsweise die Erhöhung der Temperatur des erwärmten Fluids bzw. Körpers oder des Wärmeträgerfluids während des Wärmeaustauschs größer oder gleich 10 °C, vorzugsweise größer oder gleich 20 °C, spezieller größer oder gleich 30 °C und besonders bevorzugt größer oder gleich 40 °C ist.

4. Verfahren nach einem der Ansprüche 1 bis 3, wobei das Wärmeübertragungsfluid 1,3,3,3-Tetrafluorpropen umfasst oder aus 1,3,3,3-Tetrafluorpropen besteht.

5. Verfahren nach einem der Ansprüche 1 bis 4, wobei das Wärmeübertragungsfluid 2,3,3,3-Tetrafluorpropen umfasst oder aus 2,3,3,3-Tetrafluorpropen besteht.

6. Verfahren nach einem der Ansprüche 1 bis 5, wobei das Wärmeübertragungsfluid mindestens 50 % Tetrafluorpropen, vorzugsweise mindestens 75 % und weiter bevorzugt mindestens 90 % Tetrafluorpropen umfasst.

7. Verfahren nach einem der Ansprüche 1 bis 6, wobei das Wärmeübertragungsfluid außerdem einen oder mehrere teilfluorierte Kohlenwasserstoffe umfasst, die vorzugsweise aus 1,1,1,2-Tetrafluorethan, Difluormethan, 1,1-Difluorethan und 1,1,1,2,2-Pentafluorethan ausgewählt sind.

8. Verfahren nach einem der Ansprüche 1 bis 7, wobei das Wärmeübertragungsfluid mit einem oder mehreren Additiven, die aus Schmiermitteln, Stabilisatoren, Tensiden, Tracern, Fluoreszenzmitteln, Geruchsmitteln, Solubilisatoren und Mischungen davon ausgewählt sind, kombiniert ist.

## Claims

1. Method for heating a fluid or a body by means of a vapour compression circuit containing a heat-transfer fluid comprising tetrafluoropropene, said method comprising, successively and cyclically, evaporation of the heat-transfer fluid, compression of the heat-transfer fluid, cooling of the heat-transfer fluid and expansion of the heat-transfer fluid, **characterized in that** the heat-transfer fluid is in the supercritical state at the outcome of the compression.

2. Method according to Claim 1, in which the fluid or the body heated is heated to a temperature of greater than or equal to 100°C, preferably greater than or equal to 110°C, more particularly greater than or equal to 120°C, and particularly preferably greater than or equal to 130°C.

3. Method according to Claim 1 or 2, in which, during the cooling, the heat-transfer fluid exchanges heat with the fluid or body heated or with a heat-exchange fluid, and preferably the increase in temperature of the fluid or body heated or of the heat-exchange fluid, during the heat exchange, is greater than or equal to 10°C, preferably greater than or equal to 20°C, more particularly greater than or equal to 30°C, and particularly preferably greater than or equal to 40°C.

4. Method according to one of Claims 1 to 3, in which the heat-transfer fluid comprises 1,3,3,3-tetrafluoropropene or consists of 1,3,3,3-tetrafluoropropene.

5. Method according to one of Claims 1 to 4, in which the heat-transfer fluid comprises 2,3,3,3-tetrafluoropropene or consists of 2,3,3,3-tetrafluoropropene.

6. Method according to one of Claims 1 to 5, in which the heat-transfer fluid comprises at least 50% of tetrafluoropropene, preferably at least 75%, and more particularly at least 90% of tetrafluoropropene.

7. Method according to one of Claims 1 to 6, in which the heat-transfer fluid also comprises one or more hydrofluorocarbons, preferably chosen from 1,1,1,2-tetrafluoroethane, difluoromethane, 1,1-difluoroethane and 1,1,1,2,2-pentafluoroethane.

8. Method according to one of Claims 1 to 7, in which the heat-transfer fluid is combined with one or more additives chosen from lubricants, stabilizers, surfactants, tracers, fluorescent agents, odorants, solubilizing agents, and mixtures thereof.
